# EUROPEAN PATENT SPECIFICATION

(11) **EP 4 132 058 B1**
(45) Date of publication and mention of the grant of the patent: **27.11.2024**
(21) Application number: 22197646.7
(22) Date of filing: 07.06.2018
(51) Int. Cl.: H04W 16/32

(54) **SYSTEM AND METHOD FOR TRIGGERING BEAM RECOVERY**
SYSTEM UND VERFAHREN ZUR AUSLÖSUNG EINER STRAHLWIEDERHERSTELLUNG
SYSTÈME ET PROCÉDÉ DE DÉCLENCHEMENT DE RÉCUPÉRATION DE FAISCEAU

(30) Priority: 16.06.2017 US 201762521088 P; 18.09.2017 US 201715707590
(43) Date of publication of application: 08.02.2023
(62) Divisional of application: 18817859.4
(73) Proprietor: Huawei Technologies Co., Ltd., Shenzhen, Guangdong 518129, (CN)
(72) Inventor: XIA, Pengfei, San Diego, 92130 (US); LIU, Bin, San Diego, 92130 (US)
(74) Representative: Körber, Martin Hans

(56) References cited:
- WO-A1-2016/127403
- SAMSUNG: "Discussion on beam recovery procedure", vol. RAN WG1, no. Hangzhou; 20170515 - 20170519, 14 May 2017 (2017-05-14), XP051273152, Retrieved from the Internet <URL:http://www.3gpp.org/ftp/Meetings_3GPP_SYNC/RAN1/Docs/> [retrieved on 20170514]
- SAMSUNG: "Trigger condition for beam failure recovery", vol. RAN WG1, no. Athens, Greece; 20170213 - 20170217, 12 February 2017 (2017-02-12), XP051210082, Retrieved from the Internet <URL:http://www.3gpp.org/ftp/Meetings_3GPP_SYNC/RAN1/Docs/> [retrieved on 20170212]
- HUAWEI ET AL: "Beam failure recovery", vol. RAN WG1, no. Hangzhou, China; 20170515 - 20170519, 14 May 2017 (2017-05-14), XP051273331, Retrieved from the Internet <URL:http://www.3gpp.org/ftp/Meetings_3GPP_SYNC/RAN1/Docs/> [retrieved on 20170514]
- INSTITUTE FOR INFORMATION INDUSTRY (III): "Discussion on beam failure recovery mechanism", vol. RAN WG1, no. Hangzhou, China; 20170515 - 20170519, 14 May 2017 (2017-05-14), XP051274057, Retrieved from the Internet <URL:http://www.3gpp.org/ftp/Meetings_3GPP_SYNC/RAN1/Docs/> [retrieved on 20170514]

## Description

### TECHNICAL FIELD

The present disclosure relates generally to a system and method for digital communications, and, in particular embodiments, to a system and method for triggering beam recovery.

### BACKGROUND

One possible deployment scenario for fifth generation (5G) New Radio (NR) system architecture uses high frequency (HF) (6 gigahertz (GHz) and above, such as millimeter wavelength (mmWave)) operating frequencies to exploit greater available bandwidth and less interference than what is present at the congested lower frequencies. However, pathloss is a significant issue. Beamforming may be used to overcome the high pathloss.

However, even with beamforming, channels between a user equipment (UE) and a next generation (NG) NodeB (gNB) are fragile and are prone to blockage, thereby becoming unreliable. In some situations, the best remedy for an unreliable channel is to replace the unreliable channel with another channel that is reliable. This is referred to as beam recovery. Prior to performing beam recovery, the unreliable channel needs to be detected, thereby triggering beam recovery.

Therefore, there is a need for mechanisms supporting triggering beam recovery.

SAMSUNG, "Discussion on beam recovery procedure", vol. RAN WG1, no. Hangzhou; 20170515 - 20170519, (20170514), 3GPP DRAFT; R1-1707954 DISCUSSION ON BEAM RECOVERY PROCEDURE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20170514), XP051273152, discloses UE Beam failure recovery mechanism when only one or more BPLs are configured for control channel transmission to a UE.

### SUMMARY

Example embodiments provide a system and method for triggering beam recovery.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

In accordance with an example embodiment, a method for operating a receiving device is provided. The method includes monitoring, by the receiving device, a transmission from a transmitting device, deriving, by the receiving device, a reliability measure of the transmission, and detecting, by the receiving device, that a triggering condition comparing the reliability measure with a threshold is met, and based thereon, sending, by the receiving device, a triggering signal to trigger a beam failure recovery procedure.

Optionally, in any of the preceding embodiments, wherein the triggering signal includes a pre-defined sequence by a technical standard or a pre-configured sequence configured by an access node.

Optionally, in any of the preceding embodiments, wherein the triggering signal is sent over a first random access channel whose time location, frequency location, or code/sequence are different from a second random access channel for initial access or mobility purposes.

Optionally, in any of the preceding embodiments, wherein the transmission occurs on at least one of a control channel or a data channel, and wherein deriving the reliability measure comprises determining a result of an attempt to decode the at least one of the control channel or the data channel.

Optionally, in any of the preceding embodiments, wherein the transmission conveys a reference signal, and wherein deriving the reliability measure comprises determining a signal quality measure of the reference signal.

Optionally, in any of the preceding embodiments, wherein the signal quality measure comprises at least one of a reference signal received power (RSRP) measurement, a reference signal received quality (RSRQ) measurement, a received signal power measurement, a signal to noise ratio (SNR) measurement, or a signal plus interference to noise ratio (SINR) measurement.

Optionally, in any of the preceding embodiments, wherein the reference signal comprises at least one of a demodulation reference signal (DMRS), a channel state information reference signal (CSI-RS), a synchronization signal (SS), phase time tracking reference signal (PTRS), or a sounding reference signal (SRS).

Optionally, in any of the preceding embodiments, wherein the triggering condition is a comparison of a plurality of reliability measures with one or more thresholds and the triggering condition is met when a specified number of reliability measures in the plurality of reliability measures satisfy the one or more thresholds.

Optionally, in any of the preceding embodiments, wherein the specified number of reliability measures is specified in a technical standard or configured in a signaling exchange between the transmitting device and the receiving device.

Optionally, in any of the preceding embodiments, wherein the reliability measures in the specified number of reliability measures are derived from monitored transmissions occurring within a time window.

Optionally, in any of the preceding embodiments, wherein there are a plurality of triggering conditions, wherein for each triggering condition, the reliability measures in the specified number of reliability measures are derived from monitored transmissions occurring within an associated time window, and wherein the associated time windows are different.

Optionally, in any of the preceding embodiments, wherein the triggering condition combines two single trigger conditions, wherein a first single trigger condition is a comparison of a plurality of first reliability measures with a first threshold and is met when a specified number of first reliability measures in the plurality of first reliability measures satisfies the first threshold, and wherein a second single trigger condition is a comparison of a plurality of second reliability measures with a second threshold and is met when a specified number of second reliability measures in the plurality of first reliability measures satisfies the second threshold.

Optionally, in any of the preceding embodiments, wherein one of the first single trigger condition or the second single trigger condition is a negative condition.

Optionally, in any of the preceding embodiments, wherein the first single trigger condition is met when signal quality measures of CSI-RSs satisfy the first threshold and the second single trigger condition is met when signal quality measures of SSs does not satisfy the second threshold.

Optionally, in any of the preceding embodiments, wherein the first single trigger condition is met when signal quality measures of CSI-RSs satisfy the first threshold and the second single trigger condition is met when signal quality measures of SSs satisfy the second threshold.

Optionally, in any of the preceding embodiments, wherein the receiving device is a user equipment (UE).

In accordance with an example embodiment, a method for operating a receiving device is provided. The method includes detecting, by the receiving device, an occurrence of a triggering condition, sending, by the receiving device, a triggering signal to trigger a beam failure recovery procedure in response to detecting the occurrence of the triggering condition, monitoring, by the receiving device, for a positive response from a transmitting device, and detecting, by the receiving device, that no positive response is received within a specified first time window, and based thereon, sending, by the receiving device, another triggering signal to trigger the beam failure recovery procedure.

Optionally, in any of the preceding embodiments, wherein the method further comprises detecting, by the receiving device, that no positive response is received within a specified second time window, sending, by the receiving device, a triggering signal to an upper layer entity of the receiving device to trigger a radio link failure procedure.

Optionally, in any of the preceding embodiments, wherein the specified second time window begins after the specified first time window.

In accordance with an example embodiment, a method for operating a receiving device is provided. The method includes monitoring, by the receiving device, transmissions from a transmitting device, deriving, by the receiving device, reliability measures of the transmissions, and detecting, by the receiving device, that a first trigger condition of the reliability measures is met and a second trigger condition of the reliability measures is met, and based thereon, sending, by the receiving device, a first triggering signal to an upper layer entity of the receiving device to trigger a radio link failure (RLF) recovery procedure.

Optionally, in any of the preceding embodiments, wherein the method further comprises detecting, by the receiving device, that the first trigger condition of the reliability measures is met and the second trigger condition of the reliability measures is not met, and based thereon, sending, by the receiving device, a second triggering signal to the transmitting device to trigger a beam failure recovery procedure.

Optionally, in any of the preceding embodiments, wherein the second triggering signal is a pre-defined sequence specified by a technical standard or a pre-configured sequence configured by an access node.

Optionally, in any of the preceding embodiments, wherein the second triggering signal is sent over a first random access channel whose time location, frequency location, or code/sequence are different from a second random access channel for initial access or mobility purposes.

Practice of the foregoing embodiments enables UEs to detect unreliable channels and trigger beam recovery. Because the UE may be able to detect the unreliable channels before the gNB, the overall beam recovery can start earlier and complete sooner.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates an example wireless communications system according to example embodiments described herein;
Figure 2 illustrates an example beam tracking system according to example embodiments described herein;
Figure 3 illustrates a flow diagram of example operations occurring in a receiving device monitoring channels and/or signals to potentially detect an unreliable channel and trigger beam recovery according to example embodiments described herein;
Figure 4A illustrates a flow diagram of example operations occurring in a receiving device monitoring channels to potentially detect an unreliable channel and trigger beam recovery according to example embodiments described herein;
Figure 4B illustrates a flow diagram of example operations occurring in a receiving device monitoring signals to potentially detect an unreliable channel and trigger beam recovery according to example embodiments described herein;
Figure 5 illustrates a flow diagram of example operations occurring in a receiving device using a combinatorial trigger condition to potentially trigger beam recovery according to example embodiments described herein;
Figure 6 illustrates a flow diagram of example operations occurring in a receiving device using multiple trigger conditions to separately trigger beam recovery and RLF recovery according to example embodiments described herein;
Figure 7 illustrates a flow diagram of example operations occurring in a receiving device separately triggering beam recovery and RLF recovery according to example embodiments described herein;
Figure 8 illustrates an example communication system according to example embodiments described herein;
Figures 9A and 9B illustrate example devices that may implement the methods and teachings according to this disclosure; and
Figure 10 is a block diagram of a computing system that may be used for implementing the devices and methods disclosed herein.

### DETAILED DESCRIPTION OF ILLUSTRATIVE EMBODIMENTS

The making and using of the disclosed embodiments are discussed in detail below. It should be appreciated, however, that the present disclosure provides many applicable inventive concepts that can be embodied in a wide variety of specific contexts. The specific embodiments discussed are merely illustrative of specific ways to make and use the embodiments, and do not limit the scope of the disclosure.

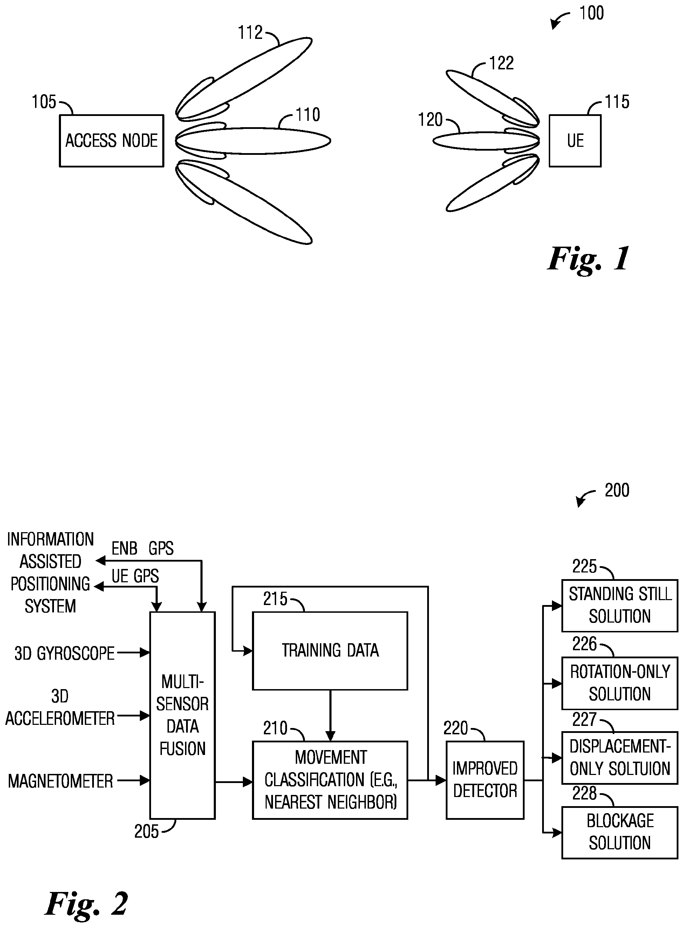

Figure 1 illustrates an example wireless communications system 100. Communications system 100 includes an access node 105 serving a user equipment (UE) 115. In a first operating mode, communications to and from UE 115 pass through access node 105. In a second operating mode, communications to and from UE 115 do not pass through access node 105, however, access node 105 typically allocates resources used by UE 115 to communicate. Access nodes may also be commonly referred to as evolved NodeBs (eNBs), base stations, NodeBs, master eNBs (MeNBs), secondary eNBs (SeNBs), next generation (NG) NodeBs (gNBs), master gNBs (MgNBs), secondary gNBs (SgNBs), remote radio heads, access points, and the like, while UEs may also be commonly referred to as mobiles, mobile stations, terminals, subscribers, users, stations, and the like.

While it is understood that communications systems may employ multiple access nodes capable of communicating with a number of UEs, only one access node and one UE are illustrated for simplicity.

As discussed previously, pathloss in communications systems operating at high frequency (HF) (6 gigahertz (GHz) and above, such as millimeter wavelength (mmWave)) operating frequencies is high, and beamforming may be used to overcome the high pathloss. As shown in Figure 1, both access node 105 and UE 115 communicate using beamformed transmissions and receptions. As an example access node 105 communicates using a plurality of communications beams, including beams 110 and 112, while UE 115 communicates using a plurality of communications beams, including beams 120 and 122.

A beam may be a pre-defined set of beamforming weights in the context of codebook-based precoding or a dynamically defined set of beamforming weights in the context of non-codebook based precoding (e.g., Eigen-based beamforming (EBB)). It should be appreciated that a UE may rely on codebook-based precoding to transmit uplink signals and receive downlink signals, while a TRP may rely on non-codebook based precoding to form certain radiation patterns to transmit downlink signals and/or receive uplink signals.

A variety of limitations exist that may limit the performance of a UE, the limitations include:
- Electromagnetic coupling: The electric currents on the surface of the antenna of the UE induce various forms of electric magnetic coupling, which affects the characteristic impedance and antenna aperture efficiency;
- Physical size: In general, the display panel and battery of a UE occupy the largest percentage of the volume of the UE, while various other devices (including sensors, cameras, speakers, etc.) also take up a significant portion of the remaining volume and are usually placed on the edges of the UE. Antennas (third generation (3G), fourth generation (4G), fifth generation (5G) new radio (NR), and so on) are also present. Power consumption, heat dissipation, and so forth, also have an impact on physical size;
- Usage: The intended usage of the UE also has an impact on the performance of UE; As an example, the hand of the user may reduce the gain of the antenna array by an average of 10 dB when it completely encompasses the antenna array; and
- Antenna array configuration: Multiple antenna arrays may be used; potentially requiring multiple radio frequency (RF) integrated circuits (ICs) and a single baseband (BB) IC (BBIC).

It is noted that the movement of the UE may lead to significant degradation in the signal quality. However, the movement may be detected using a variety of sensors, including:
- Three dimensional (3D) gyroscopes with a root mean squared (RMS) noise on the order of 0.04 degrees per second;
- 3D accelerometers with a RMS noise on the order of 1 milli-g; and
- Magnetometers.
If the movement of the UE is known, it may possible to quickly track the beams used by the UE. Table 1 presents a summary of example angular displacements for typical activities.

**Table 1: Summary of example angular displacements for typical activities.**

| Activity | Angular Displacement (in 100 milliseconds of degree) |
|---|---|
| Reading/web browsing | 6-11 |
| Horizontal to vertical changes | 30-36 |
| Playing games | 72-80 |

Figure 2 illustrates an example beam tracking system 200. Beam tracking system 200 may be located in a UE. Beam tracking system 200 uses data from a plurality of sensors (including position information from information assisted positioning systems (such as a Global Positioning System (GPS)), 3D gyroscopic information, 3D accelerometer information, magnetometer information, and so on) to perform beam tracking. Position information from information assisted positioning systems, in addition to information from motion sensors, may lead to improved motion detection, accuracy, and reliability. A data fusion unit 205 receives sensor data and processes the data, providing the processed data to a movement classification unit 210 that classifies the type of movement the UE is undergoing. Movement classification unit 210 also receives information from a training data unit 215 that provides information to movement classification unit 210 based on historical data to help in the classification of the movement of the UE. The classified movement is provided to a detector 220. Detector 220 may consider if the movement of the UE warrants beam tracking adjustments. Examples of movements that warrant beam tracking adjustments include spatial displacements exceeding a spatial threshold, angular rotations exceeding an angular threshold, acceleration/deceleration exceeding a threshold, and so on. Should beam tracking adjustments be warranted, beam tracking adjustment solutions are generated. Examples of solutions include a beam adjustment for a situation where the UE is standing still 225, a beam adjustment for a situation where the UE is rotating 226, a beam adjustment for a situation where the UE is experiencing a displacement 227, and a beam adjustment for a situation where the UE is blocked 228.

In modern communications systems, for each access node and UE pair, the communications system maintains a plurality of downlink control channels (such as physical downlink control channels (PDCCHs) in Third Generation Partnership Project (3GPP) Long Term Evolution (LTE) compliant communications systems, for example) and downlink data channels (such as physical downlink shared channels (PDSCHs) in 3GPP LTE compliant communications systems, for example).

Each downlink channel (e.g., downlink control channel or downlink data channel) may be characterized by a choice of a transmit beam *wₜᵢ* and a receive beam *wᵣᵢ*, where i is the beam index of the downlink channel (e.g., downlink control channel or downlink data channel) which may also be referred to as a CSI-RS-resource-index (CRI). The access node knows which beam precoding vector *wᵣᵢ* to use, given the beam index i. The discussion presented below focusses on the downlink control channel, in particular, the PDCCH of 3GPP LTE compliant communications systems. However, the techniques presented herein are operable with the downlink data channel, in particular, the PDSCH of 3GPP LTE compliant communications systems. Therefore, the discussion of downlink control channels and the use of 3GPP LTE compliant terminology should not be construed as being limiting to either the scope of the techniques presented herein.

Associated with each downlink control channel is a demodulation reference signal (DMRS). The DMRS is conveyed in a resource within the PDCCH to assist demodulation at the UE. Once the location of the PDCCH is known to the UE, the DMRS sequence and/or pattern is also known to the UE. Let DMRS_1, ..., DMRS_N be N DMRSs associated with N PDCCHs.

The access node may configure multiple resources containing multiple channel state information reference signals (CSI-RSs) to enable measurement of the channel between the access node and the UE. The CSI-RS may also be used for beam management, beam recovery, as well as other purposes. Once the location of CSI-RS resources is known to the UE, the CSI-RS sequence and/or pattern is also known to the UE. Let CSIRS_1, ..., CSIRS_K be the K CSI-RSs over the K CSI-RS resources.

The access node may configure multiple resources containing multiple synchronization signals (SS) to enable synchronization (amongst others) between the access node and the UE. The SS may also be used for beam management, beam recovery, as well as other purposes. The SS sequence and/or pattern may be known initially to the UE. Let SS_1, ..., SS_Q be Q SSs between the access node and the UE. It is noted that the set of Q SS signals and the set of **K** CSI-RS signals may be subsets of a larger set of reference signals, labeled as generalized reference signals (GRS) herein for simplicity. The GRS may also be referred to as generalized CSI-RS, CSI-RS, CSI-RS for beam management, beam failure detection RS, and others.

According to an example embodiment, a receiving device (such as a UE) monitors control channels, data channels, and/or reference signals to trigger beam recovery. A UE may monitor control channels, data channels, the SS, the CSI-RS, and the PDCCH DMRS to detect an unreliable beam and trigger a beam recovery. The UE derives a measure of the reliability of a channel based on information gathered from the monitoring of control channels, data channels, and/or reference signals. A sliding window may be applied to the measure of the reliability of the channel to capture the dynamic nature of the reliability of the channel. In a situation where the receiving device is not a UE, the receiving device may monitor channels, and signals (reference signals) to detect an unreliable beam and trigger a beam recovery.

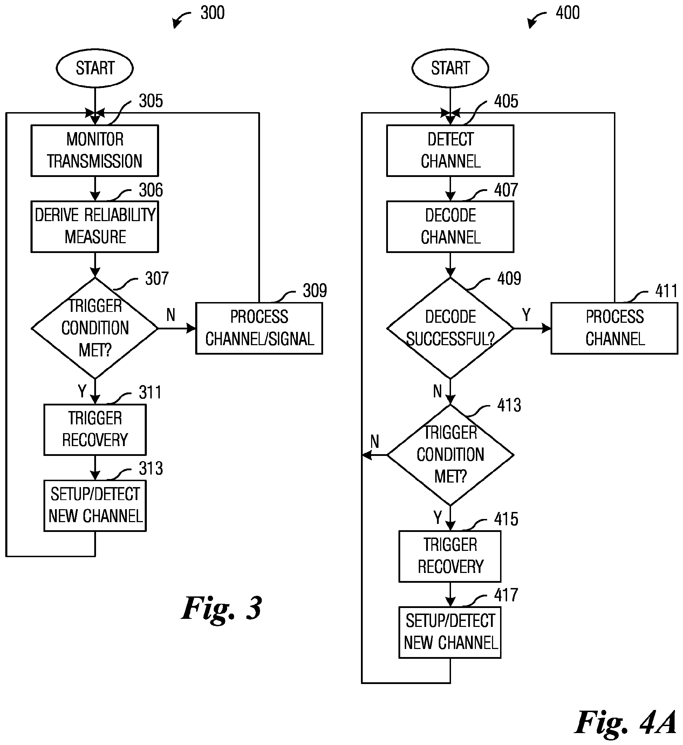

Figure 3 illustrates a flow diagram of example operations 300 occurring in a receiving device monitoring channels and/or signals to potentially detect an unreliable channel and trigger beam recovery. Operations 300 may be indicative of operations occurring in a receiving device as the receiving device is monitoring channels and/or signals to potentially detect an unreliable channel and trigger beam recovery.

Operations 300 begin with the receiving device monitoring a transmission (such as a channel and/or a signal) (block 305). In a situation where the receiving device is a UE, the UE may monitor downlink control channels, downlink data channels, and/or reference signals, such as SS, CSI-RS, PDCCH DMRS, and so on. In a situation where the receiving device is an access node, the access node may monitor uplink control channels, uplink data channels, and/or uplink reference signals, such as sounding reference signals (SRS). The receiving device derives a reliability measure from the monitored transmission (block 306). As an example, the reliability measure is a result of a decoding attempt (either success or failure, for example) of a channel. As another example, the reliability measure is a measure of the quality or strength of the signal. The receiving device performs a check to determine if a trigger condition is met based on the reliability measure (block 307). Example trigger conditions include comparisons of the reliability measure (e.g., decoding performance, signal quality, signal strength, or combinations thereof) with thresholds. In an embodiment, a single trigger condition is used. In another embodiment, a combination of two or more trigger conditions is used. The combination may be positive or negative. If the trigger condition is not met, the receiving device processes the channel and/or signal (block 309) and returns to block 305 to continue monitoring the channel and/or signal.

If the trigger condition is met, the receiving device triggers beam recovery (block 311). If the receiving device is a UE, the UE may have to trigger beam recovery by sending a beam recovery request message. As an example, the UE triggers beam recovery by sending a pre-configured sequence on a beam recovery random access channel (BRACH) resource. If the receiving device is an access node, the access node may trigger beam recovery by itself. Depending on the receiving device, the receiving device either sets up a new channel or detects a new channel (block 313). If the receiving device is an access node, the access node sets up a new channel, while if the receiving device is a UE, the UE detects a new channel. The receiving device returns to block 305 to continue monitoring the new channel and/or signal.

Figure 4A illustrates a flow diagram of example operations 400 occurring in a receiving device monitoring channels to potentially detect an unreliable channel and trigger beam recovery. Operations 400 may be indicative of operations occurring in a receiving device as the receiving device monitors channels (e.g., control channels and/or data channels) to potentially detect an unreliable channel and trigger beam recovery.

Operations 400 begin with the receiving device detecting a channel (block 405). In a situation where the receiving device is a UE, the UE may be detecting a downlink control channel (such as a PDCCH) and/or a downlink data channel (such as a PDSCH). In a situation where the receiving device is an access node, the access node may be detecting an uplink control channel (such as a physical uplink control channel (PUCCH)) and/or an uplink data channel (such as a physical uplink shared channel (PUSCH)). The receiving device attempts to decode the channel (block 407). The attempted decoding of the channel is a derivation of the reliability measure of the channel. In general, the decoding attempt will either succeed or fail. The receiving device performs a check to determine if the decoding attempt was successful (block 409). If the decoding attempt was successful, the receiving device processes the channel (block 411) and returns to block 405 to further detect the channel.

If the decoding attempt was not successful, the receiving device performs a check to determine if a trigger condition is met (block 413). The trigger condition may simply be one or more unsuccessful decoding attempts. Alternatively, the trigger condition may be one or more unsuccessful decoding attempts within a specified time window. In a situation where there are multiple channels being monitored, each channel may have a different trigger condition or a single trigger condition may be used for all channels. As an illustrative example, consider a situation where the receiving device is monitoring a single PDCCH and/or PDSCH, the trigger condition may be **K** consecutive or non-consecutive unsuccessful decoding attempts with a specified time window, where **K** is an integer number. As another illustrative example, consider a situation where the receiving device is monitoring **N** PDCCHs and/or PDSCHs, the trigger condition may be **K1** consecutive or non-consecutive unsuccessful decoding attempts of a first PDCCH and/or PDSCH within a first specified time window, **K2** consecutive or non-consecutive unsuccessful decoding attempts of a second PDCCH and/or PDSCH within a second specified time window,..., and **KN** consecutive or non-consecutive unsuccessful decoding attempts of an **N**-th PDCCH and/or PDSCH within an **N**-th specified time window, where **K1, K2, ..., KN** are integer numbers. The **N** specified time windows may be the same or different.

Furthermore, in the situation where **N** channels are being monitored, a number of individual trigger conditions being met may also be a condition on its own. As an illustrative example, if the number of individual trigger conditions being met is one, then any of the **N** trigger conditions being met is sufficient to trigger beam recovery. As another illustrative example, if the number of individual trigger conditions being met is **L**, where **L** is an integer number that is less than or equal to **N**, then at least **L** individual trigger conditions must be met in order to trigger beam recovery.

If the trigger condition is not met, the receiving device returns to block 405 to continue monitoring the channel. If the trigger condition is met, the receiving device triggers beam recovery (block 415). Depending on the receiving device, the receiving device either sets up a new channel or detects a new channel (block 417).

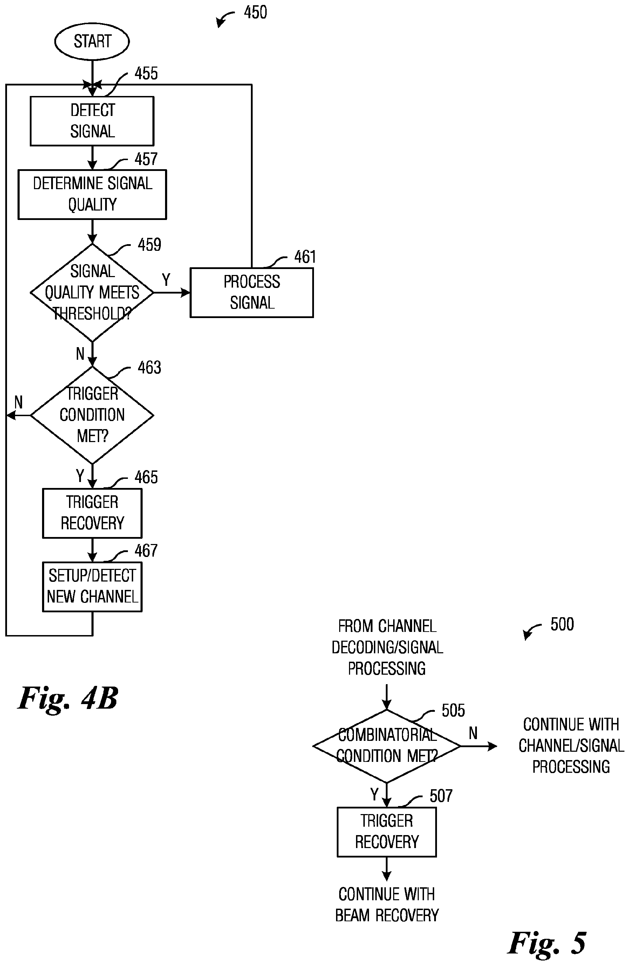

Figure 4B illustrates a flow diagram of example operations 450 occurring in a receiving device monitoring signals to potentially detect an unreliable channel and trigger beam recovery. Operations 450 may be indicative of operations occurring in a receiving device as the receiving device monitors signals (e.g., reference signals) to potentially detect an unreliable channel and trigger beam recovery.

Operations 450 begin with the receiving device detecting a signal (block 455). In a situation where the receiving device is a UE, the UE may be detecting downlink reference signals such as SS, CSI-RS, PDCCH DMRS, phase time tracking reference signal (PTRS), and so on. In a situation where the receiving device is an access node, the access node may be detecting uplink reference signals such as SRS, and so forth. The receiving device determines a measure of the signal quality of the signal (block 457). Example measures of signal quality include a reference signal received power (RSRP), reference signal received quality (RSRQ), signal to noise ratio (SNR), signal plus interference to noise ratio (SINR), received signal power, and so on. Determining the signal quality of the signal is a derivation of the reliability measure of the signal. The receiving device performs a check to determine if the signal quality meets a threshold (block 409). The receiving device may compare the signal quality with a numerical value representing an acceptable signal quality, for example. If the signal quality meets the threshold, the receiving device processes the signal (block 461) and returns to block 455 to further detect the signal.

If the signal quality did not meet the threshold, the receiving device performs a check to determine if a trigger condition is met (block 463). The trigger condition may simply be one or more times the signal quality did not meet the threshold. Alternatively, the trigger condition may be one or more times the signal quality did not meet the threshold within a specification time window. In a situation where there are multiple signals being monitored, each signal may have a different trigger condition or a single trigger condition may be used for all signals.

As an illustrative example, the signal monitored is a single PDCCH DMRS, the trigger condition may be **P** consecutive or non-consecutive times when the signal quality did not meet the threshold, where **P** is an integer number. Alternatively, the trigger condition may be **P** consecutive or non-consecutive times when the signal quality did not meet the threshold within a specified time window. As another illustrative example, consider a situation where the receiving device is monitoring **N** PDCCH DMRSs, the trigger condition may be **P1** consecutive or non-consecutive times the signal quality of a first PDCCH DMRS did not meet a first threshold within a first specified time window, **P2** consecutive or non-consecutive times the signal quality of a second PDCCH DMRS did not meet a second threshold within a second specified time window,..., and **PN** consecutive or non-consecutive unsuccessful times the signal quality of an **N**-th PDCCH DMRS did not meet an **N**-th threshold within an **N**-th specified time window, where **P**1, **P**2, ..., **P**N are integer numbers. The **N** thresholds may be the same or different. The **N** specified time windows may be the same or different. It is noted that the signal quality may be defined over a group of signals so that the signal quality becomes beam group signal quality to support transmit diversity.

As an illustrative example, the signal monitored is a single CSI-RS, the trigger condition may be **M** consecutive or non-consecutive times when the signal quality did not meet the threshold, where **M** is an integer number. Alternatively, the trigger condition may be **M** consecutive or non-consecutive times when the signal quality did not meet the threshold within a specified time window. As another illustrative example, consider a situation where the receiving device is monitoring **N** CSI-RSs, the trigger condition may be **M1** consecutive or non-consecutive times the signal quality of a first CSI-RS did not meet a first threshold within a first specified time window, **M2** consecutive or non-consecutive times the signal quality of a second CSI-RS did not meet a second threshold within a second specified time window,..., and **MN** consecutive or non-consecutive unsuccessful times the signal quality of an N-th CSI-RS did not meet an **N**-th threshold within an **N**-th specified time window, where **M1, M2, ..., MN** are integer numbers. The **N** thresholds may be the same or different. The **N** specified time windows may be the same or different. It is noted that the signal quality may be defined over a group of signals so that the signal quality becomes beam group signal quality to support transmit diversity.

As an illustrative example, the signal monitored is a single SS, the trigger condition may be **Q** consecutive or non-consecutive times when the signal quality did not meet the threshold, where **Q** is an integer number. Alternatively, the trigger condition may be **Q** consecutive or non-consecutive times when the signal quality did not meet the threshold within a specified time window. As another illustrative example, consider a situation where the receiving device is monitoring **N** SSs, the trigger condition may be **Q1** consecutive or non-consecutive times the signal quality of a first SS did not meet a first threshold within a first specified time window, **Q**2 consecutive or non-consecutive times the signal quality of a second SS did not meet a second threshold within a second specified time window, ..., and **QN** consecutive or non-consecutive unsuccessful times the signal quality of an **N**-th SS did not meet an **N**-th threshold within an **N**-th specified time window, where **Q1**, **Q2**, ..., **QN** are integer numbers. The **N** thresholds may be the same or different. The **N** specified time windows may be the same or different. It is noted that the signal quality may be defined over a group of signals so that the signal quality becomes beam group signal quality to support transmit diversity.

Furthermore, in the situation where **N** signals are being monitored, a number of individual trigger conditions being met may also be a condition on its own. As an illustrative example, if the number of individual trigger conditions being met is one, then any of the **N** trigger conditions being met is sufficient to trigger beam recovery. As another illustrative example, if the number of individual trigger conditions being met is **L**, where **L** is an integer number that is less than or equal to **N,** then at least **L** individual trigger conditions must be met in order to trigger beam recovery.

If the trigger condition is not met, the receiving device returns to block 455 to continue monitoring the signal. If the trigger condition is met, the receiving device triggers beam recovery (block 465). Depending on the receiving device, the receiving device either sets up a new channel or detects a new channel (block 467).

According to an example embodiment, a combinatorial trigger condition that comprises a combination of two or more single trigger conditions is used to trigger beam recovery. The combinatorial trigger condition may allow for the triggering of beam recovery based on more than one channels and/or signals. The combinatorial trigger condition may be a positive combination of two or more single trigger conditions. An example positive combinatorial trigger condition comprises: if (first trigger condition is met) AND (second trigger condition is met) then trigger beam recovery. The combinatorial trigger condition may be a negative combination of two or more single trigger conditions. An example negative combinatorial trigger condition comprises: if (first trigger condition is met) AND NOT (second trigger condition is met) then trigger beam recovery.

In a positive combinatorial trigger condition, if all of the single trigger conditions of the positive combinatorial trigger condition are met, then the receiving device triggers beam recovery. It is noted that an additional condition regarding whether or not a new beam has been identified may be applicable. Possible combinatorial trigger conditions in a situation with four single trigger conditions (condition_1, condition_2, condition_3, and condition_4) include:
condition_1 AND condition_2,
condition_1 AND condition_3,
condition_1 AND condition_4,
condition_2 AND condition_3,
condition_2 AND condition_4, and
condition_3 AND condition_4.

An example positive combinatorial trigger condition with two of the single trigger conditions discussed previously is expressible as:
if (the signal qualities of one or more CSI-RS signals do not meet corresponding thresholds **M** consecutive times)
AND
(the signal qualities of one or more SS signals do not meet corresponding thresholds **Q** consecutive times)
then the receiving device triggers beam recovery.

In a negative combinatorial trigger condition, at least one of the single trigger conditions is presented negatively. Therefore, when the negative single trigger condition is met, the original single trigger condition is not met. Although it is possible that all of the single trigger conditions of a negative combinatorial trigger condition are presented negatively, there should be at least one single trigger condition that is presented positively. It is noted that an additional condition regarding whether or not a new beam has been identified may be applicable. Negative combinatorial trigger conditions in a situation with four single trigger conditions (condition_1, condition_2, condition_3, and condition_4) include:
condition_1 AND NOT condition_2,
condition_1 AND NOT condition_3,
condition_1 AND NOT condition_4,
condition_2 AND NOT condition_1,
condition_2 AND NOT condition_3,
condition_2 AND NOT condition_4,
condition_3 AND NOT condition_1,
condition_3 AND NOT condition_2,
condition_3 AND NOT condition_4,
condition_4 AND NOT condition_1,
condition_4 AND NOT condition_2, and
condition_4 AND NOT condition_3.

An example negative combinatorial trigger condition with two of the single trigger conditions discussed previously is expressible as:
if (the signal qualities of one or more CSI-RS signals do not meet corresponding thresholds **M** consecutive times)
AND NOT
(the signal qualities of one or more SS signals do not meet corresponding thresholds **Q** consecutive times)
then the receiving device triggers beam recovery.

Figure 5 illustrates a flow diagram of example operations 500 occurring in a receiving device using a combinatorial trigger condition to potentially trigger beam recovery. Operations 500 may be indicative of operations occurring in a receiving device as the receiving device uses a combinatorial trigger condition to potentially trigger beam recovery. As shown in Figure 5, operations 500 present a portion of a process to potentially detect an unreliable channel and trigger beam recovery.

Operations 500 begin after channel decoding or signal processing of the process to potentially detect an unreliable channel and trigger beam recovery with the receiving device performing a check to determine if the combinatorial trigger condition is met (block 505). If the combinatorial trigger condition is met, the receiving device triggers beam recovery (block 507) and continues with beam recovery. In order for the combinatorial trigger condition to be met, all of the individual single trigger conditions of the combinatorial trigger condition are met. As an example, in a positive combinatorial trigger condition with two single trigger conditions, both single trigger conditions must be met in order for the positive combinatorial trigger condition to be met. As another example, in a negative combinatorial trigger condition with two single trigger conditions, a first of the single trigger conditions must be met and a second of the single trigger conditions must not be met (depending upon with of the single trigger conditions is negative) in order for the negative combinatorial trigger condition to be met. If the combinatorial trigger condition is not met, the receiving device returns to continue with channel or signal processing.

According to an example embodiment, different trigger conditions (single trigger conditions and/or combinatorial trigger conditions) are used to trigger beam recovery and radio link failure (RLF) recovery. As an illustrative example, a first trigger condition is used to trigger beam recovery and a second trigger condition is used to trigger RLF recovery. The first trigger condition may be less stringent than the second trigger condition because beam recovery is typically considered less critical than RLF recovery. An illustrative example of the use of different trigger conditions to trigger beam recovery and RLF recovery includes a check to determine if the signal quality of all CSI-RSs falls below a first threshold AND the signal quality of at least one SS exceeds a second threshold, then trigger beam recovery, while if the signal quality of all CSI-RSs falls below a third threshold AND the signal quality of all SSs falls below a fourth threshold, then trigger RLF recovery.

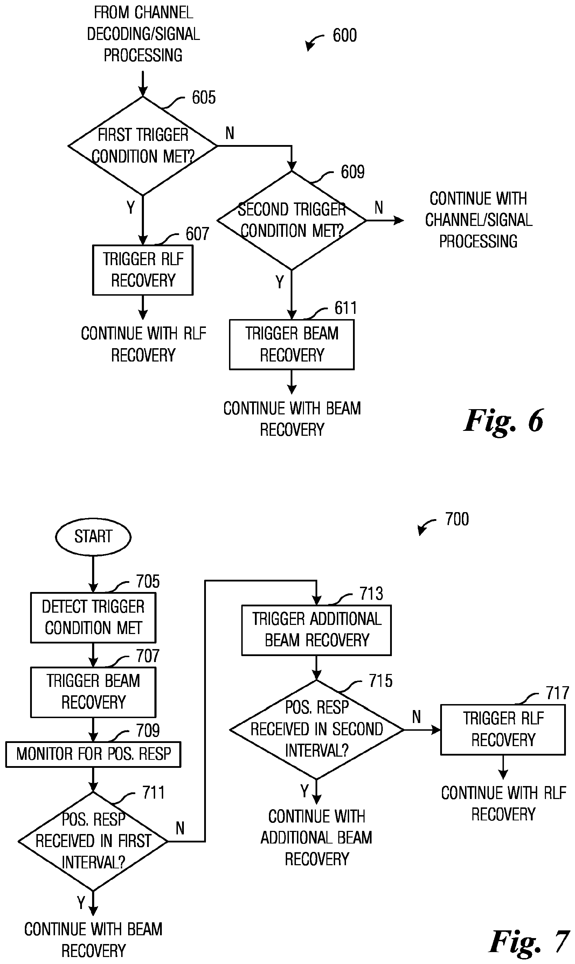

Figure 6 illustrates a flow diagram of example operations 600 occurring in a receiving device using multiple trigger conditions to separately trigger beam recovery and RLF recovery. Operations 600 may be indicative of operations occurring in a receiving device as the receiving device uses multiple trigger conditions to separately trigger beam recovery and RLF recovery. As shown in Figure 6, operations 600 present a portion of a process to potentially detect an unreliable channel or failed radio link and trigger recovery.

Operations 600 begin after channel decoding or signal processing of the process to potentially detect an unreliable channel and trigger beam recovery with the receiving device performing a check to determine if a first trigger condition is met (block 605). An example of the first trigger condition is if the signal quality of all CSI-RSs falls below a third threshold AND the signal quality of all SSs falls below a fourth threshold. If the first trigger condition is met, the receiving device triggers RLF recovery (block 607) and continues with RLF recovery. Triggering RLF recovery comprises sending a message to an upper layer entity of the receiving device, for example. If the first trigger condition is not met, the receiving device performs a check to determine if a second trigger condition is met (block 609). An example of the second trigger condition is if the signal quality of all CSI-RSs falls below a first threshold AND the signal quality of at least one SS exceeds a second threshold. If the second trigger condition is met, the receiving device triggers beam recovery (block 611) and continues with beam recovery. Triggering beam failure recovery comprises sending a message to the transmitting device in a situation where the receiving device is a UE. If the second trigger condition is not met, then both the first trigger condition and the second trigger condition are not met and the receiving device returns to continue with channel or signal processing.

With respect to triggering beam recovery, the receiving device may send a beam failure recovery request to trigger beam recovery. If no response is received after sending the beam failure recovery request (for example, after a specified amount of time), another beam failure recovery request may be sent. Up to a specified number of beam failure recovery requests may be sent. If the receiving device has sent the specified number of beam failure recovery requests without receiving a response, the receiving device may trigger a RLF recovery. As an illustrative example, the RLF recovery may involve the receiving device attempting to perform an initial access procedure.

Figure 7 illustrates a flow diagram of example operations 700 occurring in a receiving device separately triggering beam recovery and RLF recovery. Operations 700 may be indicative of operations occurring in a receiving device as the receiving device separately triggers beam recovery and RLF recovery.

Operations 700 begin with the receiving device detecting that a trigger condition is met (block 705). The trigger condition may be a single trigger condition or a combinatorial trigger condition. The receiving device triggers beam recovery (block 707). The receiving device monitors for a positive responsive (block 709). If a positive response to the beam recovery trigger is received within a first interval (block 711), the receiving device continues with beam recovery. However, if a positive response is not received within the first interval, the receiving device triggers an additional beam recovery (block 713). If a positive response to the additional beam recovery is received within a second interval (block 715), the receiving device continues with the additional beam recovery. If a positive response is not received within the second interval, the receiving device triggers RLF recovery (block 717) and continues with RLF recovery.

In beam failure recovery, it is intended to allow a UE to assist an access node in early-detection of a beam failure event, and if possible, recover from it. The discussion presented here focuses on physical random access channel (PRACH)-like beam failure recovery, where a decision to transmit a beam failure recovery request is made by the UE without a need for uplink transmission grant. It has been agreed that it is a working assumption to
- Support at least the following triggering condition(s) for beam failure recovery request transmission:
   Condition 1 - when beam failure is detected and a candidate beam is identified at least for a case when only CSI-RSs are used for new candidate beam identification; and
   Condition 2 (for future study) - beam failure is detected alone at least for the case of no reciprocity.

As related to Condition 1, when the CSI-RSs are used for new candidate beam identification, it may be beneficial to divide the entire set of CSI-RS signals into a plurality of subsets, e.g., subset one and subset two. As an example, subset one may include all CSI-RSs that are relatively narrow-beamed, while subset two may include all CSI-RSs that are relatively wide-beamed which may be quasi co-located (QCLed) with SS signals. It has also been agreed to support spatial QCL assumption between antenna port(s) within a CSI-RS resource(s) and antenna port of an SS block (or SS block time index) of a cell, while configuration of QCL for a UE specific New Radio PDCCH (NR-PDCCH) is by RRC and MAC control element (MAC-CE) signaling, for example. It is noted that more than two CSI-RS subsets are possible, depending upon the granularity of the beam widths.

Subsets one and two may be configured, by RRC signal, for example, with the same or different repetition cycle. Furthermore, the access node may signal to the UE which CSI-RS signals fall into which subset. In order for a UE to transmit a beam failure recovery request using a PRACH-like mechanism, the UE may ndeed to be able to receive at least one signal reliably within the subset two (i.e., the subset comprising wide-beam CSI-RSs). Having at least one signal reliably received within subset two helps to ensure that the PRACH-like beam failure recovery request transmission and the beam failure recovery response waiting is efficient and worthwhile. Whether the UE can receive any CSI-RS from subset one is a topic for future study.

Therefore, when only the CSI-RS is used for new candidate beam identification, support triggering beam failure recovery request transmission when a beam failure is detected and a candidate beam from a specified CSI-RS subset is identified.

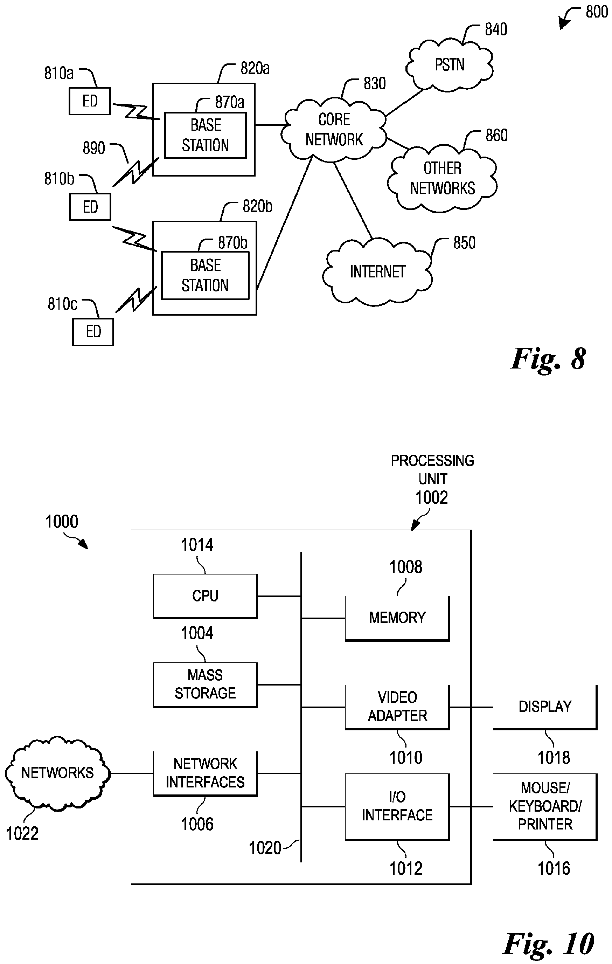

Figure 8 illustrates an example communication system 800. In general, the system 800 enables multiple wireless or wired users to transmit and receive data and other content. The system 800 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 800 includes electronic devices (ED) 810a-810c, radio access networks (RANs) 820a-820b, a core network 830, a public switched telephone network (PSTN) 840, the Internet 850, and other networks 860. While certain numbers of these components or elements are shown in Figure 8, any number of these components or elements may be included in the system 800.

The EDs 810a-810c are configured to operate and/or communicate in the system 800. For example, the EDs 810a-810c are configured to transmit and/or receive via wireless or wired communication channels. Each ED 810a-810c represents any suitable end user device and may include such devices (or may be referred to) as a user equipment/device (UE), wireless transmit/receive unit (WTRU), mobile station, fixed or mobile subscriber unit, cellular telephone, personal digital assistant (PDA), smartphone, laptop, computer, touchpad, wireless sensor, or consumer electronics device.

The RANs 820a-820b here include base stations 870a-870b, respectively. Each base station 870a-870b is configured to wirelessly interface with one or more of the EDs 810a-810c to enable access to the core network 830, the PSTN 840, the Internet 850, and/or the other networks 860. For example, the base stations 870a-870b may include (or be) one or more of several well-known devices, such as a base transceiver station (BTS), a Node-B (NodeB), an evolved NodeB (eNodeB), a Home NodeB, a Home eNodeB, a site controller, an access point (AP), or a wireless router. The EDs 810a-810c are configured to interface and communicate with the Internet 850 and may access the core network 830, the PSTN 840, and/or the other networks 860.

In the embodiment shown in Figure 8, the base station 870a forms part of the RAN 820a, which may include other base stations, elements, and/or devices. Also, the base station 870b forms part of the RAN 820b, which may include other base stations, elements, and/or devices. Each base station 870a-870b operates to transmit and/or receive wireless signals within a particular geographic region or area, sometimes referred to as a "cell." In some embodiments, multiple-input multiple-output (MIMO) technology may be employed having multiple transceivers for each cell.

The base stations 870a-870b communicate with one or more of the EDs 810a-810c over one or more air interfaces 890 using wireless communication links. The air interfaces 890 may utilize any suitable radio access technology.

It is contemplated that the system 800 may use multiple channel access functionality, including such schemes as described above. In particular embodiments, the base stations and EDs implement LTE, LTE-A, and/or LTE-B. Of course, other multiple access schemes and wireless protocols may be utilized.

The RANs 820a-820b are in communication with the core network 830 to provide the EDs 810a-810c with voice, data, application, Voice over Internet Protocol (VoIP), or other services. Understandably, the RANs 820a-820b and/or the core network 830 may be in direct or indirect communication with one or more other RANs (not shown). The core network 830 may also serve as a gateway access for other networks (such as the PSTN 840, the Internet 850, and the other networks 860). In addition, some or all of the EDs 810a-810c may include functionality for communicating with different wireless networks over different wireless links using different wireless technologies and/or protocols. Instead of wireless communication (or in addition thereto), the EDs may communicate via wired communication channels to a service provider or switch (not shown), and to the Internet 850.

Although Figure 8 illustrates one example of a communication system, various changes may be made to Figure 8. For example, the communication system 800 could include any number of EDs, base stations, networks, or other components in any suitable configuration.

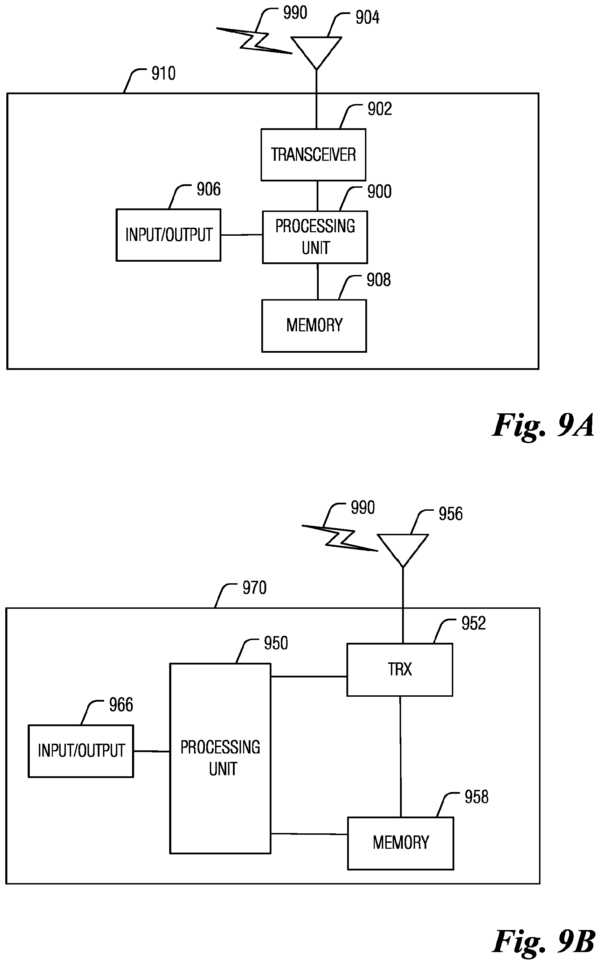

Figures 9A and 9B illustrate example devices that may implement the methods and teachings according to this disclosure. In particular, Figure 9A illustrates an example ED 910, and Figure 9B illustrates an example base station 970. These components could be used in the system 800 or in any other suitable system.

As shown in Figure 9A, the ED 910 includes at least one processing unit 900. The processing unit 900 implements various processing operations of the ED 910. For example, the processing unit 900 could perform signal coding, data processing, power control, input/output processing, or any other functionality enabling the ED 910 to operate in the system 800. The processing unit 900 also supports the methods and teachings described in more detail above. Each processing unit 900 includes any suitable processing or computing device configured to perform one or more operations. Each processing unit 900 could, for example, include a microprocessor, microcontroller, digital signal processor, field programmable gate array, or application specific integrated circuit.

The ED 910 also includes at least one transceiver 902. The transceiver 902 is configured to modulate data or other content for transmission by at least one antenna or NIC (Network Interface Controller) 904. The transceiver 902 is also configured to demodulate data or other content received by the at least one antenna 904. Each transceiver 902 includes any suitable structure for generating signals for wireless or wired transmission and/or processing signals received wirelessly or by wire. Each antenna 904 includes any suitable structure for transmitting and/or receiving wireless or wired signals. One or multiple transceivers 902 could be used in the ED 910, and one or multiple antennas 904 could be used in the ED 910. Although shown as a single functional unit, a transceiver 902 could also be implemented using at least one transmitter and at least one separate receiver.

The ED 910 further includes one or more input/output devices 906 or interfaces (such as a wired interface to the Internet 850). The input/output devices 906 facilitate interaction with a user or other devices (network communications) in the network. Each input/output device 906 includes any suitable structure for providing information to or receiving/providing information from a user, such as a speaker, microphone, keypad, keyboard, display, or touch screen, including network interface communications.

In addition, the ED 910 includes at least one memory 908. The memory 908 stores instructions and data used, generated, or collected by the ED 910. For example, the memory 908 could store software or firmware instructions executed by the processing unit(s) 900 and data used to reduce or eliminate interference in incoming signals. Each memory 908 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 9B, the base station 970 includes at least one processing unit 950, at least one transceiver 952, which includes functionality for a transmitter and a receiver, one or more antennas 956, at least one memory 958, and one or more input/output devices or interfaces 966. A scheduler, which would be understood by one skilled in the art, is coupled to the processing unit 950. The scheduler could be included within or operated separately from the base station 970. The processing unit 950 implements various processing operations of the base station 970, such as signal coding, data processing, power control, input/output processing, or any other functionality. The processing unit 950 can also support the methods and teachings described in more detail above. Each processing unit 950 includes any suitable processing or computing device configured to perform one or more operations. Each processing unit 950 could, for example, include a microprocessor, microcontroller, digital signal processor, field programmable gate array, or application specific integrated circuit.

Each transceiver 952 includes any suitable structure for generating signals for wireless or wired transmission to one or more EDs or other devices. Each transceiver 952 further includes any suitable structure for processing signals received wirelessly or by wire from one or more EDs or other devices. Although shown combined as a transceiver 952, a transmitter and a receiver could be separate components. Each antenna 956 includes any suitable structure for transmitting and/or receiving wireless or wired signals. While a common antenna 956 is shown here as being coupled to the transceiver 952, one or more antennas 956 could be coupled to the transceiver(s) 952, allowing separate antennas 956 to be coupled to the transmitter and the receiver if equipped as separate components. Each memory 958 includes any suitable volatile and/or non-volatile storage and retrieval device(s). Each input/output device 966 facilitates interaction with a user or other devices (network communications) in the network. Each input/output device 966 includes any suitable structure for providing information to or receiving/providing information from a user, including network interface communications.

Figure 10 is a block diagram of a computing system 1000 that may be used for implementing the devices and methods disclosed herein. For example, the computing system can be any entity of UE, access network (AN), mobility management (MM), session management (SM), user plane gateway (UPGW), and/or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1000 includes a processing unit 1002. The processing unit includes a central processing unit (CPU) 1014, memory 1008, and may further include a mass storage device 1004, a video adapter 1010, and an I/O interface 1012 connected to a bus 1020.

The bus 1020 may be one or more of any type of several bus architectures including a memory bus or memory controller, a peripheral bus, or a video bus. The CPU 1014 may comprise any type of electronic data processor. The memory 1008 may comprise any type of non-transitory system memory such as static random access memory (SRAM), dynamic random access memory (DRAM), synchronous DRAM (SDRAM), read-only memory (ROM), or a combination thereof. In an embodiment, the memory 1008 may include ROM for use at boot-up, and DRAM for program and data storage for use while executing programs.

The mass storage 1004 may comprise any type of non-transitory storage device configured to store data, programs, and other information and to make the data, programs, and other information accessible via the bus 1020. The mass storage 1004 may comprise, for example, one or more of a solid state drive, hard disk drive, a magnetic disk drive, or an optical disk drive.

The video adapter 1010 and the I/O interface 1012 provide interfaces to couple external input and output devices to the processing unit 1002. As illustrated, examples of input and output devices include a display 1018 coupled to the video adapter 1010 and a mouse/keyboard/printer 1016 coupled to the I/O interface 1012. Other devices may be coupled to the processing unit 1002, and additional or fewer interface cards may be utilized. For example, a serial interface such as Universal Serial Bus (USB) (not shown) may be used to provide an interface for an external device.

The processing unit 1002 also includes one or more network interfaces 1006, which may comprise wired links, such as an Ethernet cable, and/or wireless links to access nodes or different networks. The network interfaces 1006 allow the processing unit 1002 to communicate with remote units via the networks. For example, the network interfaces 1006 may provide wireless communication via one or more transmitters/transmit antennas and one or more receivers/receive antennas. In an embodiment, the processing unit 1002 is coupled to a local-area network 922 or a wide-area network for data processing and communications with remote devices, such as other processing units, the Internet, or remote storage facilities.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a monitoring unit/module, a deriving unit/module, a detecting unit/module, a decoding unit/module, a determining unit/module, and/or a triggering unit/module. The respective units/modules may be hardware, software, or a combination thereof. For instance, one or more of the units/modules may be an integrated circuit, such as field programmable gate arrays (FPGAs) or application-specific integrated circuits (ASICs).

Although the present disclosure and its advantages have been described in detail, it should be understood that various changes, substitutions and alterations can be made herein without departing from the scope of the disclosure as defined by the appended claims.

## Claims

1. A method, comprising:
monitoring, by a receiving device (970), two or more signals from a transmitting device;
detecting, by the receiving device (970), that at least a first triggering condition is met and a second triggering condition is met; and
sending, by the receiving device (970) to the transmitting device, a triggering signal to trigger a beam failure recovery procedure based on the detecting,
wherein the detecting that the first trigger condition is met comprises:
determining that one or more first reliability measures satisfy the first triggering condition based on comparing the one or more first reliability measures with a first threshold, wherein the one or more first reliability measures indicate a result of decoding attempts of a channel corresponding to a first signal in the two or more signals, and
wherein the detecting that the second trigger condition is met comprises:
when one or more second signal qualities exceed a second threshold, determining that one or more second signal quality measures meet the second triggering condition, wherein a second signal in the two or more signals corresponds to the one or more second signal quality measures.

2. The method of claim 1, wherein the second signal quality measures are different from the first reliability measures.

3. The method of claim 1, wherein the first signal is different from the second signal.

4. The method of claim 1, wherein the first signal comprises a channel state information reference signal, CSI-RS.

5. The method of claim 1, wherein the first trigger condition indicates that the decoding attempt is unsuccessful.

6. The method of claim 1, wherein the second signal quality measures comprise at least one of a reference signal received power, RSRP, measurement, a reference signal received quality, RSRQ, measurement, a received signal power measurement, a signal to noise ratio, SNR, measurement, or a signal plus interference to noise ratio, SINR, measurement.

7. The method of claim 1, wherein the second signal comprises at least one of a demodulation reference signal, DMRS, a channel state information reference signal, CSI-RS, a synchronization signal, SS, a phase time tracking reference signal, PTRS, or a sounding reference signal, SRS.

8. A receiving device (970), comprising:
a transceiver (952), configured to:
monitor two or more signals from a transmitting device; and
at least one processing unit (950), configured to:
detect that at least a first triggering condition is met and a second triggering condition is met; and
the transceiver (952) is further configured to:
send, to the transmitting device, a triggering signal to trigger a beam failure recovery procedure based on the first triggering condition being met and the second triggering condition being met,
wherein detecting that the first trigger condition is met comprises:
determining that one or more first reliability measures satisfy the first triggering condition based on comparing the one or more first reliability measures with a first threshold, wherein the one or more first reliability measures indicate a result of decoding attempts of a channel corresponding to a first signal in the two or more signals, and
wherein detecting that the second trigger condition is met comprises:
when one or more second signal qualities exceed a second threshold, determining that one or more second signal quality measures meet the second triggering condition, wherein a second signal in the two or more signals corresponds to the one or more second signal quality measures.

9. The receiving device (970) of claim 8, wherein the second signal quality measures are different from the first reliability measures.

10. The receiving device (970) of claim 8, wherein the first signal is different from the second signal.

11. The receiving device (970) of claim 8, wherein the first signal comprises a channel state information reference signal, CSI-RS.

12. The receiving device (970) of claim 8, wherein the first trigger condition indicates that the decoding attempt is unsuccessful.

13. The receiving device (970) of claim 8, wherein the second signal quality measures comprise at least one of a reference signal received power, RSRP measurement, a reference signal received quality, RSRQ, measurement, a received signal power measurement, a signal to noise ratio, SNR measurement, or a signal plus interference to noise ratio, SINR measurement.

14. The receiving device (970) of claim 8, wherein the second signal comprises at least one of a demodulation reference signal, DMRS, a channel state information reference signal, CSI-RS, a synchronization signal, SS, a phase time tracking reference signal, PTRS, or a sounding reference signal, SRS.

15. A user equipment (115), UE, comprising:
a non-transitory memory storage comprising instructions; and
one or more processors in communication with the non-transitory memory storage,
wherein the one or more processors execute the instructions to cause the UE to perform the method of any one of claims 1 to 7.

## Patentansprüche

1. Verfahren, das umfasst:
Überwachen, durch eine Empfangsvorrichtung (970), von zwei oder mehr Signalen von einer Übertragungsvorrichtung;
Erfassen, durch die Empfangsvorrichtung (970), dass mindestens eine erste Auslösebedingung erfüllt ist und eine zweite Auslösebedingung erfüllt ist; und
Senden, durch die Empfangsvorrichtung (970) an die Übertragungsvorrichtung, eines Auslösesignals, um einen Strahlausfallwiederherstellungsvorgang basierend auf dem Erfassen auszulösen,
wobei das Erfassen, dass die erste Auslösebedingung erfüllt ist, umfasst:
Bestimmen, dass eine oder mehrere erste Zuverlässigkeitsmaßnahmen die erste Auslösebedingung erfüllen, basierend auf einem Vergleichen der einen oder der mehreren ersten Zuverlässigkeitsmaßnahmen mit einem ersten Schwellenwert, wobei die eine oder die mehreren ersten Zuverlässigkeitsmaßnahmen ein Ergebnis von Dekodierungsversuchen eines Kanals angeben, der einem ersten Signal in den zwei oder mehr Signalen entspricht, und
wobei das Erfassen, dass die zweite Auslösebedingung erfüllt ist, umfasst:
wenn eine oder mehrere zweite Signalqualitäten einen zweiten Schwellenwert überschreiten, Bestimmen, dass die eine oder die mehreren zweiten Signalqualitätsmaßnahmen die zweite Auslösebedingung erfüllen, wobei ein zweites Signal in den zwei oder mehr Signalen der einen oder den mehreren zweiten Signalqualitätsmaßnahmen entspricht.

2. Verfahren nach Anspruch 1, wobei die zweiten Signalqualitätsmaßnahmen sich von den ersten Zuverlässigkeitsmaßnahmen unterscheiden.

3. Verfahren nach Anspruch 1, wobei das erste Signal sich von dem zweiten Signal unterscheidet.

4. Verfahren nach Anspruch 1, wobei das erste Signal ein
Kanalzustandsinformationsreferenzsignal, CSI-RS, umfasst.

5. Verfahren nach Anspruch 1, wobei die erste Auslösebedingung angibt, dass der Dekodierungsversuch nicht erfolgreich ist.

6. Verfahren nach Anspruch 1, wobei die zweiten Signalqualitätsmaßnahmen mindestens eines von einer Referenzsignalempfangsleistungs(RSRP)-Messung, einer Referenzsignalempfangsqualitäts(RSRQ)-Messung, einer Empfangssignalleistungsmessung, einer Signal-Rausch-Verhältnis(SNR)-Messung oder einer Signal-plus-Interferenz-Rausch-Verhältnis(SINR)-Messung umfassen.

7. Verfahren nach Anspruch 1, wobei das zweite Signal mindestens eines von einem Demodulationsreferenzsignal, DMRS, einem Kanalzustandsinformationsreferenzsignal, CSI-RS, einem Synchronisationssignal, SS, einem Phasenzeitverfolgungsreferenzsignal, PTRS, oder einem Sondierungsreferenzsignal, SRS, umfasst.

8. Empfangsvorrichtung (970), die umfasst:
einen Sendeempfänger (952), der konfiguriert ist zum:
Überwachen von zwei oder mehr Signalen von einer Übertragungsvorrichtung; und mindestens eine Verarbeitungseinheit (950), die konfiguriert ist zum:
Erfassen, dass mindestens eine erste Auslösebedingung erfüllt ist und eine zweite Auslösebedingung erfüllt ist; und
der Sendeempfänger (952) ferner konfiguriert ist zum:
Senden, an die Übertragungsvorrichtung, eines Auslösesignals, um einen Strahlausfallwiederherstellungsvorgang basierend darauf, dass die erste Auslösebedingung erfüllt ist und die zweite Auslösebedingung erfüllt ist, auszulösen, wobei das Erfassen, dass die erste Auslösebedingung erfüllt ist, umfasst:
Bestimmen, dass eine oder mehrere erste Zuverlässigkeitsmaßnahmen die erste Auslösebedingung erfüllen, basierend auf dem Vergleichen der einen oder der mehreren ersten Zuverlässigkeitsmaßnahmen mit einem ersten Schwellenwert, wobei die eine oder die mehreren ersten Zuverlässigkeitsmaßnahmen ein Ergebnis von Dekodierungsversuchen eines Kanals angeben, der einem ersten Signal in den zwei oder mehr Signalen entspricht, und
wobei das Erfassen, dass die zweite Auslösebedingung erfüllt ist, umfasst:
wenn eine oder mehrere zweite Signalqualitäten einen zweiten Schwellenwert überschreiten, Bestimmen, dass die eine oder die mehreren zweiten Signalqualitätsmaßnahmen die zweite Auslösebedingung erfüllen, wobei ein zweites Signal in den zwei oder mehr Signalen der einen oder den mehreren zweiten Signalqualitätsmaßnahmen entspricht.

9. Empfangsvorrichtung (970) nach Anspruch 8, wobei die zweiten Signalqualitätsmaßnahmen sich von den ersten Zuverlässigkeitsmaßnahmen unterscheiden.

10. Empfangsvorrichtung (970) nach Anspruch 8, wobei das erste Signal sich von dem zweiten Signal unterscheidet.

11. Empfangsvorrichtung (970) nach Anspruch 8, wobei das erste Signal ein Kanalzustandsinformationsreferenzsignal, CSI-RS, umfasst.

12. Empfangsvorrichtung (970) nach Anspruch 8, wobei die erste Auslösebedingung angibt, dass der Dekodierungsversuch nicht erfolgreich ist.

13. Empfangsvorrichtung (970) nach Anspruch 8, wobei die zweiten Signalqualitätsmaßnahmen mindestens eines von einer Referenzsignalempfangsleistungs(RSRP)-Messung, einer Referenzsignalempfangsqualitäts(RSRQ)-Messung, einer Empfangssignalleistungsmessung, einer Signal-Rausch-Verhältnis(SNR)-Messung oder einer Signal-plus-Interferenz-Rausch-Verhältnis(SINR)-Messung umfassen.

14. Empfangsvorrichtung (970) nach Anspruch 8, wobei das zweite Signal mindestens eines von einem Demodulationsreferenzsignal, DMRS, einem Kanalzustandsinformationsreferenzsignal, CSI-RS, einem Synchronisationssignal, SS, einem Phasenzeitverfolgungsreferenzsignal, PTRS, oder einem Sondierungsreferenzsignal, SRS, umfasst.

15. Benutzereinrichtung (115), UE, die umfasst:
einen nicht flüchtigen Memoryspeicher, der Anweisungen umfasst; und
einen oder mehrere Prozessoren in Kommunikation mit dem nicht flüchtigen Memoryspeicher, wobei der eine oder die mehreren Prozessoren die Anweisungen ausführen, um die UE zu veranlassen, das Verfahren nach einem der Ansprüche 1 bis 7 durchzuführen.

## Revendications

1. Procédé, comprenant :
la surveillance, par un dispositif de réception (970), de deux signaux ou plus provenant d'un dispositif d'émission ;
la détection, par le dispositif de réception (970), du fait qu'au moins une première condition de déclenchement est satisfaite et qu'une seconde condition de déclenchement est satisfaite ; et
l'envoi, par le dispositif de réception (970) au dispositif d'émission, d'un signal de déclenchement pour déclencher une procédure de rétablissement de défaillance de faisceau sur la base de la détection,
dans lequel la détection du fait que la première condition de déclenchement est satisfaite comprend :
la détermination du fait qu'une ou plusieurs premières mesures de fiabilité satisfont à la première condition de déclenchement sur la base de la comparaison de la ou des premières mesures de fiabilité avec un premier seuil, dans lequel la ou les premières mesures de fiabilité sont utilisées pour indiquer un résultat de tentatives de décodage d'un canal correspondant à un premier signal parmi les deux signaux ou plus, et
dans lequel la détection du fait que la seconde condition de déclenchement est satisfaite comprend :
la comparaison d'une ou plusieurs secondes qualités de signal à un second seuil, et la détermination du fait qu'une ou plusieurs secondes mesures de qualité de signal satisfont à la seconde condition de déclenchement, dans lequel un second signal parmi les deux signaux ou plus correspond à la ou aux secondes mesures de qualité de signal.

2. Procédé selon la revendication 1, dans lequel les secondes mesures de qualité de signal sont différentes des premières mesures de fiabilité.

3. Procédé selon la revendication 1, dans lequel le premier signal est différent du second signal.

4. Procédé selon la revendication 1, dans lequel le premier signal comprend un signal de référence
d'informations d'état de canal, CSI-RS.

5. Procédé selon la revendication 1, dans lequel la première condition de déclenchement indique que la tentative de décodage a échoué.

6. Procédé selon la revendication 1, dans lequel les secondes mesures de qualité de signal comprennent au moins un parmi une mesure de puissance reçue de signal de référence, RSRP, une mesure de qualité reçue de signal de référence, RSRQ, une mesure de puissance de signal reçu, une mesure de rapport signal sur bruit, SNR, ou une mesure de rapport signal plus interférence sur bruit, SINR.

7. Procédé selon la revendication 1, dans lequel le second signal comprend au moins un parmi un signal de référence de démodulation, DMRS, un signal de référence d'informations d'état de canal, CSI-RS, un signal de synchronisation, SS, un signal de référence de suivi de temps de phase, PTRS, ou un signal de référence de sondage, SRS.

8. Dispositif de réception (970), comprenant :
un émetteur-récepteur (952) configuré pour :
surveiller deux signaux ou plus provenant d'un dispositif d'émission ; et
au moins une unité centrale (950) configurée pour :
détecter qu'au moins une première condition de déclenchement est satisfaite et qu'une seconde condition de déclenchement est satisfaite ; et
l'émetteur-récepteur (952) est en outre configuré pour :
envoyer, au dispositif de transmission, un signal de déclenchement pour déclencher une procédure de récupération de défaillance de faisceau sur la base de la première condition de déclenchement et de la seconde condition de déclenchement,
dans lequel la détection du fait que la première condition de déclenchement est satisfaite comprend :
la détermination du fait qu'une ou plusieurs premières mesures de fiabilité satisfont à la première condition de déclenchement sur la base de la comparaison de la ou des premières mesures de fiabilité avec un premier seuil, dans lequel la ou les premières mesures de fiabilité sont utilisées pour indiquer un résultat de tentatives de décodage d'un canal correspondant à un premier signal parmi les deux signaux ou plus, et
dans lequel la détection du fait que la seconde condition de déclenchement est satisfaite comprend :
lorsqu'une ou plusieurs secondes qualités de signal dépassent un second seuil, la détermination du fait qu'une ou plusieurs secondes mesures de qualité de signal satisfont à la seconde condition de déclenchement, dans lequel un second signal parmi les deux signaux ou plus correspond à la ou aux secondes mesures de qualité de signal.

9. Dispositif de réception (970) selon la revendication 8, dans lequel les secondes mesures de qualité de signal sont différentes des premières mesures de fiabilité.

10. Dispositif de réception (970) selon la revendication 8, dans lequel le premier signal est différent du second signal.

11. Dispositif de réception (970) selon la revendication 8, dans lequel le premier signal comprend un signal de référence d'informations d'état de canal, CSI-RS.

12. Dispositif de réception (970) selon la revendication 8, dans lequel la première condition de déclenchement indique que la tentative de décodage a échoué.

13. Dispositif de réception (970) selon la revendication 8, dans lequel les secondes mesures de qualité de signal comprennent au moins une parmi une mesure de puissance reçue de signal de référence, RSRP, une mesure de qualité reçue de signal de référence, RSRQ, une mesure de puissance de signal reçu, une mesure de rapport signal sur bruit, SNR, ou une mesure de rapport signal plus interférence sur bruit, SINR.

14. Dispositif de réception (970) selon la revendication 8, dans lequel le second signal comprend au moins un parmi un signal de référence de démodulation, DMRS, un signal de référence d'informations d'état de canal, CSI-RS, un signal de synchronisation, SS, un signal de référence de suivi de temps de phase, PTRS, ou un signal de référence de sondage, SRS.

15. Équipement utilisateur (115), UE, comprenant :
un stockage de mémoire non transitoire comprenant des instructions ; et
un ou plusieurs processeurs en communication avec le stockage de mémoire non transitoire, dans lequel le ou les processeurs exécutent des instructions pour amener l'UE à réaliser le procédé selon l'une quelconque des revendications 1 à 7.
